# EUROPEAN PATENT APPLICATION

(11) **EP 3 586 984 A1**
(43) Date of publication of application: **01.01.2020**
(21) Application number: 17897874.8
(22) Date of filing: 27.02.2017
(51) Int. Cl.: B07C 5/02, B07C 5/34

(54) **METHOD AND APPARATUS FOR SELECTING AND ANALYSING BULK MATERIAL**

(71) Applicant: Van Looy, Eric, 08700 Igualada (Barcelona) (ES)
(72) Inventor: Van Looy, Eric, 08700 Igualada (Barcelona) (ES)
(74) Representative: Diaz Nunez, Joaquin
(86) International application number: PCT/ES2017/070107
(87) International publication number: WO 2018/154151

(57) **Abstract**

Bulk material sorting and analysis method and equipment comprising a laser detection unit (300) LIBS (Laser-Induced Breakdown Spectroscopy Laser-Induced Plasma Spectroscopy) online analysis system incorporated into the selector equipment comprising a bulk product infeed system employing a combination of vibratory feed (100) chute (110) and conveyor belt (140) that aligns access to the incoming material to be analyzed without interference from the bottom of the line at the end of the conveyor belt, where the laser beam is placed and where the returned signal (light) or reflection is picked up by a detector located near the laser. This detector is placed at the end of the belt. The equipment also includes a system with a diverting device (180) that separates the desired or undesired materials.

## Description

### OBJECT OF THE INVENTION

The invention, as the heading of this disclosure states, refers to a method and system for the sorting and analysis of bulk material, providing structural and constitutive features which will be described in detail below and signify an improvement of the current state of the art within its field of application.

More specifically, the object of the invention focuses on an "online" analysis and sorting system using Laser-Induced Breakdown Spectroscopy, hereinafter LIBS, with a feeding system that uses a combination of a vibratory feeding system and a chute leading onto a conveyor belt allowing interference-free access to the incoming material to be analyzed. This is done from beneath the material stream at the end of the conveyor belt, with the the laser beam located at the conveyor belt outlet and the returned signal (light) or reflection is captured by a detector found near the laser. In addition, a diverting device separates the wanted or not wanted material pieces from the bulk material street upon reception of an actuation signal from the central control system.

### TECHNICAL FIELD AND BACKGROUND

The invention is included, generally, in the field of sorting devices that operate by means of sensors, especially those using Laser Induced Breakdown Spectroscopy (LIBS) alone or in combination with other technologies employing sensors, and more particularly refers to a system for directing a LIBS analysis of material leaving a conveyor belt system to be sorted by a diverting system.

For various analysis and sorting applications, sensor-based methods are used to determine material constitution, surface nature, color, brightness or even a combination of these from a particular material sample.

A known method is the use of laser-induced breakdown spectroscopy (LIBS), which involves focusing a laser beam on a surface of the sample with a density powerful enough to transform a small piece of the material sample into a plasma state. The optical emissions from the plasma plume are collected by the light collection optics, and the spectral distribution (i.e. intensity as a function of wavelength) of the collected optical emissions is analyzed in a wavelength sensitive detector such as a spectrometer that provides information on the spectral distribution in electronic form. Because the atomic and molecular components of the sample material have characteristic spectra of optical emissions, the information provided by the spectrometer reveals the components of that part of the sample on which the laser beam focused or was directed.

The material sample is a solid metallic fragment, in particular an Aluminum fragment, or in general any other bulk material. Known LIBS measuring devices are portable analyzers for measuring in situ the quality of bulk material in recycling yards or mining processes; LIBS measuring systems are capable of characterizing several samples in terms of elemental concentrations. In other applications the type of material, such as a particular alloy composition, can be identified with or without the determination of exact elemental concentrations. Unlike the use of XRF (X-ray fluorescence) technology, the major advantage of using the LIBS system is its ability to determine the elemental concentration of light elements such as Li, B, Be, C, Al, Na and Mg. This makes LIBS the perfect alternative for many applications in Metal and Metal Alloy Recycling, especially for Aluminium alloys and especially in today's automotive industry, where many different valuable Aluminium alloys are used for many parts of the car body as well as the engine and panels (4000-5000 series). Another application is the heavy fraction post Eddy Current Separator or post heavy means separation; based on the elemental information produced by the spectrometer, the heavy metals can be separated into high quality material concentrates.

### EXPLANATION OF THE INVENTION

The method of and system for the sorting and analysis of bulk material that the invention proposes are configured as a novelty within their field of application, with the characteristic details that distinguish them conveniently included in the final claims that accompany this description.

Specifically, the present invention proposes a method using a LIBS system to manage the rapid analysis of the material at the end of a conveyor belt and positioned beneath the material flow, thus providing spectral measurements rapidly and with a reasonably high degree of precision for the desired industrial and commercial application. In addition, such a system operates in conjunction with sensor technology positioned above and below said conveyor belt which provides numerous additional detailed data on the composition of the material stream, as well as the shape and size thereof.

In a first embodiment, the sorting of the metals is carried out without the need for additional laser scanning as in all other prior art systems using conveyor belts. Here, each piece of material to be sampled is isolated before being fed onto the conveyor belt. The material pieces are arranged in a monolayer and arranged in rows on the vibratory feeder, before sliding down a chute in a row one after the other, thus eliminating the need for additional laser scanning. At the outlet end of the chute the material leaves the chute and is aligned in one or more rows on the running conveyor belt.

After being on the conveyor belt, the material leaves the conveyor belt; a laser beam is fired from below the material stream at the exit of the conveyor belt. A laser beam is fired from a detection module, sending at least one laser beam through a specially designed aperture; the piece of sample material or metal follows the constant speed of the conveyor belt, eliminating the need to move the focus of the LIBS laser. The material path on the conveyor belt ensures that every single piece of material can be reached by the laser individually and due to the limited freedom of each piece, it is possible for pieces with different shapes and weights to all follow the same speed, allowing the laser to always reach each piece with precision. The collected data is analyzed to distinguish the types of material and alloys. The material is then sorted according to the parameters determined in the sorting program and are sorted shortly after detection by an air injector system or a mechanical diverting device.

In several embodiments of the invention, a system of laser spectroscopy is provided on particles or pieces of material laying in line on a moving conveyor belt, which is faster, more accurate and much more economical than prior art systems using a conveyor belt or a chute. Such embodiments differ from traditional embodiments which fire laser light at material pieces or particles from above the conveyor belt or in one example of the embodiments, a LIBS measuring system provides a substantially V-shaped hole or aperture in a substantially V-shaped conveyor belt allowing access to the material to be analyzed from the underside of said conveyor belt.

The advantages of the above examples as opposed to the conventional analytical method include, but are not limited to:
- Each piece of material is aligned on the conveyor belt in one or more tracks before leaving the outlet of the conveyor belt. Consequently, each piece can be sampled and no abruption occurs.
- The position of each material piece in relation to the laser unit is fixed by the constant distance between the conveyor belt outlet and the detection module containing the measurement and laser system. Each piece on the conveyor belt has a known position and distance with respect to the laser.

- Since the positions of the material in all coordinates are known and the distance to the surface of the pieces is also known, no additional position laser technology or additional measurement technology is required. This use of laser technology and its method of operation in combination with a fast-moving conveyor belt is novel and innovative for the commercial market of the LIBS sorter.
- Regardless of its shape, weight and type, each material piece has exactly the same conveying speed due to friction-free conveying using a conveyor belt instead of a chute.
- In a specific example of an embodiment of the invention, a laser spectroscopy system is provided on material particles or pieces, arranged in a row on a running V-shaped conveyor belt system that is faster, more accurate and much more economical than other prior art systems using a conveyor belt or chute to supply the material to a laser system.

For its part, the generally more common implementation of measurement from above a conveyor belt has significant problems:
- For example, the distance between the surface of the material pieces on the conveyor belt and the laser optics varies according to the size of the material, so here an automatic focus or a large depth of field is required for the optical system; this will lead to a complex optical system that is slower and less accurate.
- If the laser spectroscopy system is fixed above the conveyor belt, separate from the conveyor belt system, some material pieces cannot be completely analyzed because the laser system only analyzes at a particular point on the conveyor belt. Vibration and motion on the belt normally separate pieces by size and, therefore, at any fixed point only a subsample of the various particle or piece sizes is analyzed.

- Measurement implementations from above the conveyor belt that have tried to track each piece use up to 30 cameras and moving mirrors to target moving pieces with a laser system. This complexity is enormous and affects the reliability and industrial viability of the system.
- Other laser spectroscopy systems that use a V-shaped chute and a hole for laser detection only work if the material has a homogeneous shape and the sizes are more or less the same. Using gravity as a way of forwarding the material pieces on an inclined chute causes problems in maintaining the same speed for the different shapes and weights of the material pieces. Therefore, the amount of time between detection or analysis by the laser system and the diverting device can vary considerably. And the pieces no longer separate well, resulting in high fluctuation sorting qualities.
- The use of a hole in a concave or V-shaped chute through which the laser points and reaches the material pieces and the subsequent reception of the reflected light signal causes problems if the material does not have a well-defined shape. Crushed material usually has highly irregular shapes which not only cause speed irregularities but also instability in the individual particles or pieces of the material, causing the material to bounce on the slide, which in turn causes different distances to the laser, resulting in inaccurate measurements.

The novel features of various embodiments of the present invention, both in terms of their construction and mode of operation, as well as their economic advantages and importance for the Aluminum Recycling market and environmental advantages when Aluminum alloys can be sorted into melting ready packages, CO2 reduction and in general energy reduction of up to 90%, together with the additional advantages thereof, will be better understood from the following descriptions of specific embodiments.

The following are, therefore, more detailed descriptions of various preferred options and embodiments of the bulk material sorting and analyzing system, object of this invention. It should be noted that several aspects of the subject matter presented above and described in more detail below can be implemented in numerous ways, as the object of this invention is not limited to any particular embodiment.

Thus, in one of the embodiments of the invention, we propose a method for the sorting and analysis by laser of bulk material and the system therefore, to provide the identification of pieces in a bulk material stream comprising a combination of a singling and series formation with the aid of a vibrating feeder and a chute down which the material slides, with a specially shaped inlet to optimize the transition between the end part of the vibratory feeder and the chute inlet, with a specially shaped outlet arranged to separate the material at the end part of the feed chute and forward it in a row to the subsequent conveyor belt; the chute down which the material slides has a substantially semi-transparent configuration with a shape that matches the material scrap, and grooves that correspond to a feedthrough; there is a maximum distance from the beginning of the feed so that the stream of bulk material pieces can form a singled and series-ordered stream through the chute. The sorting system also includes a conveyor belt system with variable conveying speed optimizing throughput performance and singling. A LIBS laser unit is placed beneath the end of the conveyor belt, said unit being placed movably adjacent to the material output of the conveyor belt and the system is configured to meet a pulsed laser beam coming from the aperture of the LIBS unit and which is directed upwards over the material stream that passes through said aperture; the system is configured in such a way that there is sufficient freedom for the laser beam to reach and hit the single pieces of material passing through and allow radiation from the individual pieces to pass through the aperture in the LIBS unit. The LIBS unit is a unit that, in addition to the laser, also comprises a radiation detection device that is arranged compactly below the aperture of the unit to collect the radiation emitted by the single material pieces or particles and transmit this information via a data link to a spectrometer and a controller that is built into the LIBS unit. The spectrometer uses the collected data to analyze the composition of individual pieces in the material stream. Finally, in a preferred embodiment, the system comprises at least one particle deviating device placed below the material flow and arranged movably at the outlet of the adjacent conveyor belt and adjacent to the LIBS unit, and which is designed to move the single piece or particle upwardly, by means of a jet of compressed air, to one of the outlet systems; this diverting device is coupled to the central control unit upon the emission of a signal from said unit.

In another embodiment of the invention, we propose a bulk material sorting and analysis system to provide the identification of pieces of a bulk material stream comprising a combination of a singled and series formation with the aid of a vibratory feeder and a chute down which the material slides, with a specially shaped inlet to optimize the transition between the end part of the vibratory feeder and the chute inlet, with a specially shaped outlet arranged to separate the material at the end of the feeding chute and forward it in a row to the subsequent conveyor belt; the chute down which the material slides has a substantially semi-transparent configuration with a shape that matches the material scrap, and has grooves corresponding to a feedthrough; there is a maximum distance from the beginning of the feed so that the bulk material stream can form a singled or series-ordered stream through the chute. The sorting system also includes a conveyor belt system with variable conveying speed to optimize throughput performance and singling.

In this case, a detachable bar unit comprising an induction sensor is placed beneath the end of the conveyor belt to detect all metal pieces passing through the unit for counting and for further identification of the material. Said induction unit is connected to the central processing unit in the main machine controller. The data from this sensor is used in combination with the data from the LIBS sensor to combine the counting of the material with the analyzed laser spectroscopy data to form special recipes of particular metal alloys. At the outlet end of the conveyor belt, a LIBS unit is placed beneath the conveyor belt, which is movably arranged adjacent to the output of the material from the conveyor belt, and the system is configured to meet a pulsed laser beam coming from the aperture of the LIBS unit, upwardly directed onto the material stream that passes through said aperture of the LIBS system; the system is configured in such a way that there is sufficient freedom for the laser beam to reach and strike the single pieces or particles of the material passing through and to allow radiation from the individual pieces or particles to pass through the opening in the LIBS unit.

As in the previous variant, the LIBS unit is a unit that, in addition to the laser, further comprises a radiation detection device that is arranged compactly below the opening of the unit to collect the radiation data emitted by the single material particles and transmit this information via a data link to a spectrometer and a controller that is built into the LIBS unit. The spectrometer uses the collected data to analyze the composition of the individual particles in the material stream. Finally, also in a preferred embodiment, the system comprises at least one piece or particle diverting device placed under the material stream and arranged in a movable way at the outlet of the adjacent conveyor belt and adjacent to the LIBS unit; it is designed to direct the single piece or particle upwards, by means of a compressed air jet, to one of the outlet systems. Said device is coupled to the central control unit upon the emission of a signal from this unit.

In another embodiment, a bulk material laser sorting and analyzing system is proposed to identify the pieces of a bulk material stream comprising a combination of a singling and series formation with the aid of a vibratory feeder and a chute down which the material slides, with a specially shaped inlet to optimize the transition between the end part of the vibratory feeder and the chute inlet, and with a specially shaped outlet arranged to separate the material at the end part of the feed chute and forward it in a row to the subsequent conveyor belt; the chute down which the material slides has a substantially semi-transparent configuration with a shape conforming to the material scrap, with grooves corresponding to a feedthrough; there is a maximum distance from the beginning of the feed so that the bulk material stream can form a singled and series-ordered stream through the chute. The sorting system further comprises a conveyor belt system with variable conveying speeds to optimize throughput and singling. A detachable bar unit comprising an induction sensor is incorporated beneath the end of the conveyor belt to detect all metal pieces passing through said unit.

And which, in this case, in addition to the induction sensor, also incorporates at least one optical sensor at the end of the conveyor belt. This sensor is a color line scan camera, a monochrome camera or even an infrared camera, and is capable of collecting information from each piece of material that passes in front of it on the conveyor belt; in addition to the information from the induction sensor, other data can be detected with the optical sensors, such as shape, volume, color, brightness, surface composition or a combination thereof. Data from at least one optical sensor is used in combination with data from the LIBS laser detector to combine the material count with the analyzed laser spectroscopy data to form special recipes for particular metal alloys.

A LIBS unit is arranged movably beneath the outlet end of the conveyor belt, adjacent to the output of the material from the conveyor belt, and the system is configured to meet a pulsed laser beam coming from the opening of the LIBS unit and which is directed upwards onto the flow of material that passes through said opening of the LIBS system; the system is configured in such a way that there is sufficient freedom for the laser beam to reach and strike the single pieces or particles of the material passing through and to allow radiation from the single particles to pass through the opening in the LIBS unit. The LIBS unit is a unit that, in addition to the laser, further comprises the radiation detection device that is arranged compactly below the opening of the unit in order to collect the radiation emitted by the individual particles of the material and transmit tºhis information via a data link to a spectrometer and a controller that is built into the LIBS unit. The spectrometer uses the collected data to analyze the composition of the individual particles in the material stream. Finally, in the preferred embodiment, the system comprises at least one particle diverting device placed beneath the material flow and arranged movably at the output of the adjacent conveyor belt and adjacent to the LIBS unit and designed to direct the single particle upwards by means of a compressed air jet at one of the output systems; this device is coupled to the central control unit upon emission of a signal from said unit.

Therefore, the method of bulk material sorting and analyzing, according to the present invention, can be said to essentially comprise the following: the identification and sorting of material online in a bulk material stream from a vibratory feeder, whose purpose is to single the material and align it prior to its exit from the last tray of said feeder, after which the single material pieces pass to the specially curved inlet of chute and move along the chute where they are singled once again. The chute ends with another curve that creates an optimal starting position for the entry of the material pieces onto the subsequent conveyor belt, and a LIBS laser unit located near the outlet of the conveyor belt, beneath said conveyor belt outlet, aims at the material stream and shoots a pulsed, high-frequency laser beam onto the material pieces passing through the laser system. The free space around the material stream and the laser system allows the returned light or reflection of each material piece to be transmitted without interference. The detection device built into the laser unit collects the reflected radiation data from each individual piece of material, allowing the spectrometer that is included together with said detector within the laser system unit to identify the elemental composition of every single piece leaving the conveyor belt.

Next, an ejection system, located shortly after the laser system at one of the exits of the sorting system, is activated using an intelligent diverting system with a variable air pressure configuration selected by the controller and the software system configuration, and creates one or two diverting lines of ejected material and a line of accepted material that follows the natural flow.

Optionally, a vibratory feeder discharges the second lot of material ejected by air pressure to a detection system installed next.

Data collected from the spectrometer as well as from an induction device optionally built into the system, allows the unit to follow a specific selection recipe of the client with a given composition of elements.

This induction sensor located beneath the conveyor belt, in line with the material tracks on the conveyor belt, uses the electromagnetic signal to measure the size of each piece following the direction of the belt, detects all metal pieces and sends this data to the central controller to analyze and calculate the size of the pieces as well as their position on the belt. This data is used to optimize the blowing time of the ejection device and to minimize excessive sorting.

The method also optionally comprises another optical device above the conveyor belt, which scans and analyses the full width of the conveyor belt and collects data concerning the size, shape, color and dimensions of the pieces, or NIR (Near Infrared) data is collected and sent via a multiplexer device to a multichannel spectroscopy to analyze chemical compounds especially in the wavelengths of infrared regions. After this material leaves the conveyor belt, a LIBS laser unit installed near the the conveyor belt exit is configured to fire the high frequency pulsed laser beam onto the material passing by the laser system.

The data collected from the spectrometer as well as data from the induction sensors and the optical device can be used in the machine software to count each piece of material with a specified composition of elements. This allows the machine to follow a specific configured recipe of a defined material mix or alloy.

### DESCRIPTION OF THE DRAWINGS

In order to complement the present disclosure and to enable a better understanding of the features of the invention, said disclosure is accompanied, as an integral part of it, by drawings in which the following have been represented with an illustrative, but not limiting, character:
Figure 1 shows, schematically, an example of an embodiment of the bulk material sorting and analyzing system, object of the invention, in a lateral view thereof, showing the feeding system with the conveyor belt and the following laser detecting and deviating devices at the end of the conveyor belt, according to the object of the invention.
Figure 2 shows a schematic view similar to the one shown in the previous figure, in this case another example of the bulk material sorting and analyzing system, according to the invention, with the optical device on the laser unit.
Figure 3 shows an enlarged view of a portion of the bulk material sorting and analyzing system, according to the invention, showing the outlet area of the conveyor belt with the laser detection unit and the separation module with the air injector diverting device located next, above the material flow.
Figure 4 shows a schematic view of another embodiment of the invention, with a different position of the diverting device at the end of the conveyor belt;
Figure 5-A shows a lateral schematic elevational view of an example of another embodiment of the invention's system, in this case with a V-shaped conveyor belt.
Figure 5-B shows a view of the A-A cross-section indicated in Figure 5-A, where the V-section configuration of the conveyor belt can be seen.
Figure 6-A shows a lateral schematic elevational view of an example of yet another embodiment of the invention's system, showing the V-shaped conveyor belt with a special vibratory feeding system in front of the conveyor belt system and a diverting system to separate up to six different materials onto a stacked exit belt system.
And figure 6-B shows a top plan view of the example of the system, according to the invention, shown in figure 6-A.

### DETAILED DESCRIPTION OF THE INVENTION

In view of the aforementioned figures, and according to the adopted numbers, it is possible to appreciate the non-limiting examples of several embodiments of the bulk material sorting and analyzing system of the present invention, which comprises the parts and elements that are described in detail below.

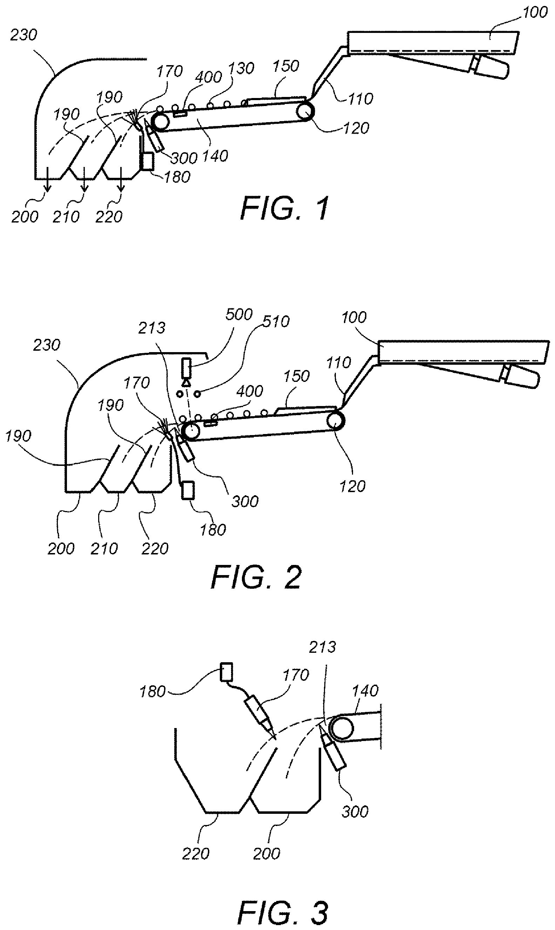

FIG.1 schematically illustrates a bulk material selection and analysis system, according to one embodiment of the invention. In this embodiment example, the system includes at least one vibrating feeder (100) that transports the material (130) to the chute (110) where the material descends, while it singles the material and organizes it in a monolayer before entering the chute (110), here, each piece of material slides down the chute (110) in at least one single track with a special channel shape and with a suitable inlet radius to facilitate the transition between the outlet of the feeder (100) and the inlet of the chute(110), thus preventing the material from bouncing.

At the specially curved end of the chute, the material (130) passes onto a conveyor belt (140), with a drum motor (120), an induction sensor bar (400) mounted beneath the conveyor belt, a laser detection unit (300) is mounted beneath the end of the conveyor belt and projects a LIBS laser beam which hits the individual metal particles passing by.

Shortly after the laser unit (300) the system includes a diverting device (180) mounted on a separation module (230), with diverted lines of ejected pieces (200, 210) and a line of accepted pieces (220), so that the diverted material is directed to one of the outlets for ejected pieces (200 and 210), the accepted material leaves the separation module through the outlet of accepted pieces (220) where it follows the natural flow. The three outputs are separated by the two dividers (190).

The diverting device (180), in this embodiment example, has at least one injector (170) and a mechanical paddle device driven by an electromagnetic or compressed air cylinder that pushes the material pieces into one of the machine outlets (200 or 210) for ejected parts, and the dividers (190) separate at least two outlet streams, three being possible.

The diverting device (180) may comprise an injector (170) with several air jets diverting material upwards at one or two outlets, and another injector (170) diverting single pieces of material downwards in a separate collection system.

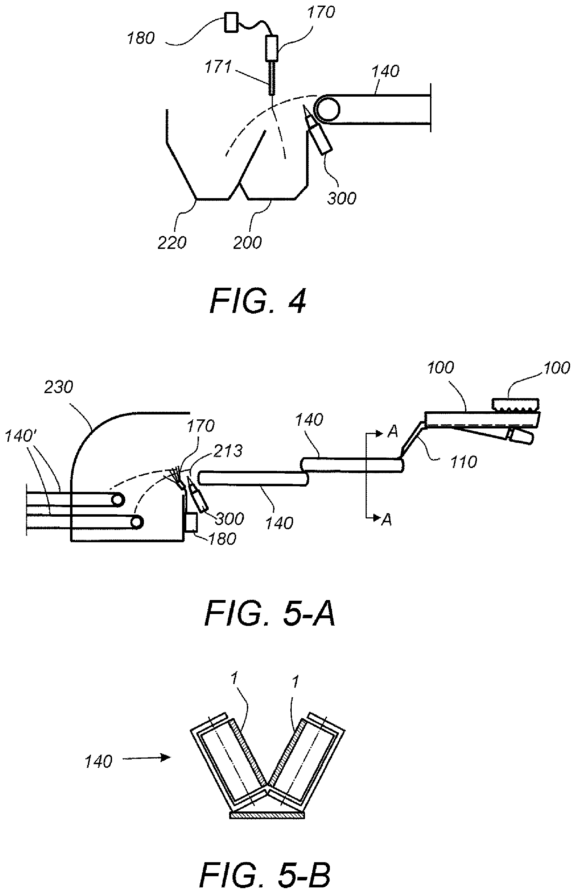

Figure 4 shows another option wherein the diverting device (180) includes a cylinder such as an injector (170) connected to a metal or plastic plate (171) positioned above the material stream stopping a material piece in the material stream, where after said piece will fall into the outlet of accepted parts (220). A divider 190 separates the diverted material from the accepted material stream and directs it to the ejected pieces outlet (200).

Figure 2 shows a schematic representation of the system, according to another embodiment of the invention. In this embodiment example, the system includes at least one vibratory feeder (100) transporting the material to the chute (110) where the material slides down, while it singles the material and organizes it into a monolayer before entering the chute (110), wherein each material piece slides down the chute (110) in at least one single track with a specially shaped channel and suitable entry radius to facilitate the transition between the exit of the feeder and the entrance of the chute, preventing the material from bouncing.

At the specially curved exit end of the chute (110), the material (130) passes onto the conveyor belt (140) equipped with a drum motor (120) with an induction sensor bar (400) mounted beneath the conveyor belt or at least one optical sensor (500) together with at least one luminaire system (510) mounted at the end of the conveyor belt (140) that detects each piece of material passing through the conveyor belt and in front of said system, collecting usable data such as color, shape, size or other.

In addition, the laser detection unit (300) is also mounted beneath the end of the conveyor belt (140), which projects a LIBS laser beam, the laser beam hits the single metal particles flying by, and shortly after the laser unit (300), the system includes a diverting device (180) with at least one diverter (170) mounted on the separation module (230) to direct the diverted material to one of the ejection outlets (200 and 210), and the accepted material through the outlet (220).

The diverting device (180), in this embodiment example shown in Figure 2 above, carries at least one fast mechanical solenoid valve connected directly or indirectly, using a hose or tube, to an air injector (170) that is mounted beneath the material stream to eject each individual particle of material that has been detected by one or more sensors in the system and selected by the corresponding parameter setting in the machine software. Depending on the characteristics and results of the detection carried out previously, the machine software will send a signal to the valve actuator that selects the correct atmospheric pressure making it possible to eject each piece of material to one or other of the outlets (210, 200) with the correct air flow and atmospheric pressure. In this way the system of the present invention is able to separate into two different outlets at least one but also two different material streams that have the same or similar characteristics. In this way three material streams are created.

Figure 3 shows a schematic illustration of the system of the present invention in yet another embodiment option thereof, with a LIBS laser device (300) and a diverting device (180) mounted above the stream, in this embodiment example, in an air injection system (170) connected to at least one solenoid valve to create a high pressure compressed air stream, which ejects a material piece downwards from the material stream passing in front of the air injector to the outlet of ejected parts (200), a divider (190) separates the deviated material from the accepted material stream that passes to the outlet of accepted parts (220).

In the two embodiment options described, and shown in Figures 1 and 2, the conveyor belt (140) is equipped with a surface provided with means (150) to keep the material pieces aligned, for example pipes or grooves, as well as being equipped with a speed control device.

For its part, the chute (110) has side walls determining tracks in line with the preceding tracks on the vibratory feeder (100) wherein the lateral guiding of the material pieces ends before the start of the curved exit of the chute. In the preferred embodiment, the chute (110) has "U"-shaped side walls and is positioned in line with the "U"-shaped tracks of the plate of the vibratory feeder (100), allowing each material piece to be aligned before being ejected and passing onto the conveyor belt (140).

In figures 5-A and 5-B, another embodiment example of the bulk material sorting and analysis system can be seen, according to the invention. In this embodiment example, the conveyor belt (140) has another configuration, namely a V-shaped cross-section configuration, for which two flat conveyor belts (1) are constructed at an angle such that both belts form a V-shaped channel together. Said belt channel allows the material to fit between both mobile conveyor belts running at the same speed. The angle between the two conveyor belts is set according to the material to be conveyed. If the size range of the material is coarse, the angle between the two belts is larger, allowing each individual piece to fit at the lowest point of the bottom of said belt channel. The sectional detail of FIG.5-B shows this conveyor configuration (140) in more detail.

The system consists of at least two conveyor belts forming a channel. The series-connected configuration of at least two conveyor belt systems allows for the division of material and, therefore, improved separation of individual particles before they reach the detection area. The chute (110) is installed in front of the V-belt conveyor system (140) to transport the material pieces from the vibratory feeder (100) to said V-shaped conveyor belt system.

The use of a V-shaped conveyor belt system (140) helps a more homogeneous flow of irregular material pieces when they pass in front of the laser system (300), since the use of a U-shaped or V-shaped chute creates a greater distance to the laser head, which causes problems with a fixed focus configuration with respect to the material pieces.

Material that stays flat on a conveyor belt always has the same distance to the laser head; this eliminates the need for autofocus. In an embodiment example, the laser repetition frequency of the laser detector system (300) is 200 Hz or more, but the laser repetition frequency can be equal to the speed at which the belt moves when carrying the sample pieces to the laser area at the end of the conveyor belt (140), a laser light passes through the beam forming optics (not shown) before focusing on the pieces with a focusing lens.

Generally, the photodetector system is hermetically sealed and may include entry and exit windows that are cleaned when necessary.

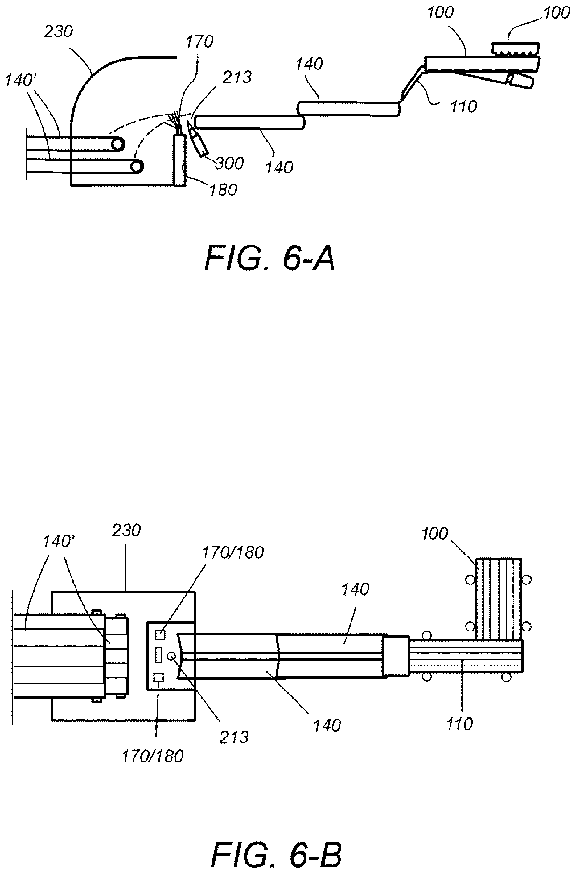

Figures 6-A and 6-B show an embodiment example using a V-shaped conveyor belt system (140) with variable speed regulation to improve performance and install different LIBS measurement systems depending on the classification application and the variety of material size.

This option is also very useful when improving the sorting system for further development of faster LIBS systems. In this embodiment example, the system includes a vibratory feed system (100) to separate the different pieces of material and align them before falling down the chute (110) and subsequently entering the V-shaped conveyor belt system (140), at least one laser detection unit (300), a diverting device (180) at the end of both sides of the conveyor system (140) and a multiple material outlet.

In this embodiment example, the chute (110) is substantially semicircular in shape as the material samples descend said chute by gravity, forming a sloped channel that is adjusted to the V shape of the next conveying system.

In this embodiment example, the material to be analyzed is moved with the V-shaped conveyor system and passes the detection area, to be analyzed at the end of the conveyor belt, this material flies through the detection area.

The laser detection unit (300) projects a laser beam that reaches the flying scrap and which is exposed at the analysis point (not shown), generating a spectral emission in the form of return light. A cleaning device using air is included in the system to clean all the lenses in the laser system.

In the preferred embodiment shown in figures 6-A and 6-B, the laser detection unit (300) fires at the samples from beneath the end of the conveyor belt system (140) and through an opening (213), which may vary in size, provided for the purpose at said conveyor belt end (140). The advantage is that gravity attracts dust downwards, but the laser and detection unit are protected from dust by an additional cover. As the height and angle of the conveyor system (140) is adjustable, the position and distance of the material with respect to the laser and the detection area is variable, allowing the sample to be at a known distance with respect to the cover and the laser.

Two diverting devices (180), placed on either side of the outlet conveyor belt outlet (140), use high-pressure air jets to divert different samples of material to at least six different outlet conduits; in this embodiment example, each of these diverters (180) communicates with the laser detection unit (300) in such a way that it acts to direct or divert fragments of certain alloy samples to at least one collection outlet. In this embodiment example, the diverters (180) are configured to eject various aluminium alloy pieces (such as the 4,000 and 5,000 series) through the air from a material stream of predominantly aluminium (Al) pieces from automotive production scrap or shredder scrap. In this embodiment example, diverting devices (180) include air injectors that emit air jets to divert material samples to a specific machine outlet conduit or to a conveyor system built into the end of the system.

In the preferred embodiment of this option, as shown in Figures 6-A and 6-B, a conveyor belt system is placed at the end of the laser detection unit (300), consisting of at least two conveyor belts (140) stepped after each other, as well as an additional conveyor belt system, at the end of the separation module (230), consisting of two additional outlet conveyor belts (140) stacked on top of each other to form the outlet discharge module, where each conveyor belt is divided into several segments or tracks, with at least two tracks being possible for each conveyor belt, and up to six or more, depending on the type and size of the material.

Thus, in this embodiment option, the chute (110) ends in front of the first 'V' shaped conveyor belt (140) to allow material to enter the first 'V' shaped conveyor belt. A second V-shaped conveyor belt (140) with a higher speed joins the first conveyor belt directly; the material passes to this second conveyor belt and moves at a higher speed than on the first conveyor belt, creating more space between the material pieces to follow and before passing onto the second conveyor belt. A LIBS laser unit (300) is located near the exit of the conveyor belt (140) below the exit of the last conveyor belt pointing upwards towards the material stream; this laser unit is installed and configured to shoot a pulsed, high-frequency laser beam at the pieces of the material passing through the laser system. The free space between the material stream and the laser system is covered with a perforated plate with an aperture (213) that allows the laser beam to traverse and fire into the material, and allows the radiation from each material piece to be transmitted in turn without interference. Said cover between the material and the laser unit keeps the laser head mostly free of dirt and dust.

The detection device built into the laser unit (30) collects the radiation data sent back from every single material piece; said detector is built into the laser system along with the spectrometer to identify the elemental composition of each individual piece leaving the conveyor belt. The diverting system is located shortly after said aperture and said area where the analysis of the material takes place, which in this option comprises two special diverting devices (180) that operate by means of air jets and are located on both sides of the V-shaped conveyor belt outlet (140), using different pressures and pointed in different directions as to distinguish between the different material pieces. The different alloys analyzed can be separated into different outlet channels using different air jets that are pointed in different directions, depending on the different characteristics of the elements found in the metal alloy. Additionally, specific so-called material mixes or recipes can be created.

The diverting system is then connected to the control unit with its sorting system management and software, controlling the incoming spectroscopic and analyzed data. It combines said data to follow the configurations of each selection program, indicating which special alloy has to go into which outlet. The installed diverters (180) that operate by means of air jets divert the selected material pieces into each different outlet channel. At least three channels are installed, but up to six or more channels can be installed in the discharge conveyor belt system.

Finally, an assembly of stacked outlet conveyor belts (140), with at least two conveyor belts stacked on top of each other to discharge the ejected material. Each outlet conveyor belt (140) can have at least two or three separate channels or tracks; the side plates on said conveyor belts keep the different material lines separate. With this special outlet conveyor belt system (140) the sorting system is capable of separating more than two or three material streams having only two outlets.

This multiple outlet configuration combined with a fast running and speed controlled inlet conveyor belt system and controlled speed has the advantage of operating with a high throughput performance as well as many material streams. This is extremely important when it comes to the recycling and sorting of different scrap material, as these are mostly mixed scrap that requires more than two separations to achieve a melting ready single stream.

In yet another alternative embodiment option, of the aforementioned variant, a chute system is provided at the end of the separation module (230), which consists of at least two chutes stacked on top of each other to form the output discharge module; said chutes can be divided into several segments or tracks, at least two tracks are possible for each outlet chute, or up to six or more, depending on the type and size of the material, a second sorting system with a laser detection unit for the ejected material being able to be incorporated next.

In the various embodiments described herein, laser parameters include, but are not limited to, active/passive Q-switched configurations, diode and/or lamp pumped configurations, OPO and/or Non-OPO configurations, and Nd:YAG, Er:glass or any other viable semiconductor material can be used.

The laser system can operate at any laser wavelength, for example for Nd:YAG at wavelengths of 1064nm, 532nm, 355nm, 266nm or 213nm, and with the energy of the laser pulses in the range of J (Joule), mJ (milijoule), microJ (microjoule); therefore, any laser energy powerful enough to make a plasma form at the focal point of the optics.

Similarly, any laser pulse duration (e.g. nanosecond, picosecond or femtosecond) and repetition frequency (aperiodic at kilohertz rates or higher) can be used if it is sufficient to cause a plasma to form in the material to be analyzed.

The main applications of the system of the described invention include, but are not limited to, aluminum scrap recycling sorters and secondary aluminum smelters that accept aluminum scrap, to assess and verify the scrap as it enters.

Other applications include the analysis and sorting of other non-ferrous metals, refractory material and other bulk material.

Having sufficiently described the nature of the present invention, as well as the manner in which it can be implemented, it is not deemed necessary to extend its explanation so that those skilled in the art may understand its scope and the advantages derived therefrom, stating that, within its essentiality, it may be implemented in other embodiments that differ in detail from those indicated by way of example, and which will be equally protected by the protection obtained, provided the fundamental principle of the present invention is not altered, changed or modified.

## Claims

1. Method of bulk material sorting and analysis, applicable for the identification and selection of parts (130) of a bulk material flow, **characterized by** understanding the identification and selection of materials online in a bulk material flow line from a vibratory feeder (100) that singles the materials and rows them prior to their exit from the last tray of that feeder after which the individual pieces of materials pass to a chute (110) where they go down and are singled once again and which presents a curve that creates an optimal starting position for the entry of the pieces of material on a conveyor belt (140) where, a laser detection unit (300) LIBS, located near the exit of the conveyor belt below the same exit of the belt, points towards the line of materials by firing a pulsed, high-frequency laser beam on the pieces of materials that pass through the laser system, there being a free space or opening (213) around the flow of materials and the laser system to allow radiation from each piece of materials to be transmitted without interference, where the detection device integrated inside the laser unit collects the reflected radiation data from each individual piece of material, and the spectrometer that is incorporated with this detector in the laser system unit identifies the elemental composition of each individual piece leaving the conveyor belt.

2. Method of selection and analysis of bulk material, according to claim 1, **characterized by** the fact that, following the laser detection unit (300), an ejection system, installed shortly after the laser system, employing an intelligent system with a diverting device (180) is activated with a variable air pressure configuration selected by the controller and the software system configuration, creating one or two diverter lines of ejected material and a line of accepted materials that follows the natural flow.

3. Method for the sorting and analysis of bulk material, according to claim 2, **characterized in that** a vibrating feeder discharges the material ejected by air pressure to a detection system installed next.

4. Method for the sorting and analysis of bulk material, according to any of the claims 1 to 3, **characterized in that** an induction sensor (400), located beneath the conveyor belt, in line with the material tracks on the conveyor belt, uses an electromagnetic signal to measure the size of each piece that follows the direction of the belt, detects all the metal pieces and sends this data to the central controller to analyze and calculate the size of the pieces as well as their position on the conveyor belt, said data is then used to optimize the blowing time of the ejection device and to minimize excessive sorting.

5. Method for the sorting and analysis of bulk material, according to claim 4, **characterized in that** an optical device (500), located above the conveyor belt, scans and analyzes the entire width of the conveyor belt and collects data regarding each piece of material passing in front of it, such as size, shape, volume, color, brightness, surface composition or a combination thereof.

6. Method for the sorting and analysis of bulk material, according to claim 5, **characterized in that** data is collected and sent by a multiplexer device to a multichannel spectroscopy to analyze the chemical compounds, especially in the waves of the infrared regions.

7. Method of selection and analysis of bulk material, according to claims 1 to 6, characterized because the data collected from the spectrometer as well as data from the induction sensors and the optical device are used in the machine software to count each piece of material with a specified composition of elements, allowing the selection unit to follow a configured recipe specific to a defined mixture of materials or alloy.

8. Equipment for the selection and analysis of bulk material, applicable for the identification and selection of pieces (130) of a flow of bulk material, according to the method of claims 1 to 7, **characterized by** comprising:
- a conveyor set consisting of a vibrating feeder (100), which singles the materials and places them in a row prior to their exit, towards a chute (110) arranged next, where the individual pieces (130) of material pass and move along the chute to be singled out once again and adopt an optimal position for entry onto a conveyor belt (140) which is contemplated immediately after the exit of this chute (110);
- and a LIBS (Laser-Induced Breakdown Spectroscopy) laser detection unit (300) located at the exit of the conveyor belt (140), below the exit of the same, so that projects a beam that ascends towards the flow of materials, being installed and configured to fire that high frequency pulsed laser beam at the material parts through a free opening (213) around the material flow and the laser unit (300) that allows the radiation to be transmitted without interference to each material part, incorporating this laser detection unit (300) a detection device integrated inside it, which collects the radiation data sent from each individual piece of materials, which together with the spectrometer to identify the elemental composition of each individual piece leaving the conveyor belt (140).

9. Equipment for the selection and analysis of bulk material, according to claim 8, **characterized by** the fact that, in addition, it comprises a diverting device (180), installed shortly after the laser detection unit (300), which creates one or two lines of ejected pieces (200, 210) and a line of accepted pieces (220) which follows the natural flow at the outlets of a separation module (230).

10. Bulk material sorting and analyzing system, according to claim 9, **characterized in that** the diverting device (180) comprises at least one injector (170) by means of an air pressure system of variable configuration, which is selected by a controller according to the software configuration, to create the lines of ejected parts (200, 210) and accepted parts (220).

11. A bulk material sorting and analysis equipment, according to any of the claims 8 to 10, characterized because the conveyor belt (140) is equipped with a surface provided with means (150), for example tubes or grooves, which keep the pieces of material in a row on it, as well as with a speed control device.

12. Bulk material sorting and analyzing system, according to any of the claims 8 to 11, **characterized in that** the chute (110) down which the material slides has a semi-transparent configuration.

13. Bulk material sorting and analyzing system, according to any of the claims 8 to 12, **characterized in that** the chute (110) down which the material slides has a curved configuration at its exit end to the conveyor belt (140).

14. A bulk material sorting and analysis equipment, according to any of the claims 8 to 13, characterized because the chute (110) has a shape that adjusts to the fragments of material and grooves that are equivalent to a passageway.

15. A bulk material sorting and analysis equipment, according to claim 14, characterized because the chute (110) has side walls that determine lanes in line with the tracks of the vibratory feeder (100) previous to it.

16. A bulk material sorting and analysis equipment, according to claim 15, characterized because the chute (110) with side walls is "U" shaped and is placed in line with the "U" shaped tracks that also presents the vibratory feeder tray (100), for the lateral guidance of each piece of material and that is in row before being expelled and entering the conveyor belt (140).

17. Bulk material sorting and analyzing system, according to any of the claims 8 to 17, **characterized in that** it includes at least one induction sensor (400) beneath the conveyor belt (140) to locate, detect and count each piece of material composed of metal or any metal composition, so as to collect data for later use in the sorting management of the system's program configurations, together with data sent from the laser unit.

18. Bulk material sorting and analyzing system, according to any of the claims 8 to 17, **characterized in that**, additionally, it includes a control unit and a processor with specific sorting software to collect data and use say data to make programmed selections.

19. Bulk material sorting and analyzing system, according to claim 18, **characterized in that** it includes an induction sensor (400) connected to the control unit, whose data together with data collected by the spectrometer of the laser unit (300), allows the control unit to follow a specific recipe with a given composition of elements.

20. A bulk material sorting and analysis equipment, according to any of the claims 8 to 19, **characterized by** the fact that, after the vibrating feeder (100), chute (110) and conveyor belt (140), and prior to the laser unit (300) LIBS, it comprises an optical device (500) incorporated above the conveyor belt (140), which scans and analyses the full width of the conveyor belt and collects data about each piece of material passing in front of it.

21. Bulk material sorting and analyzing system, according to claim 20, **characterized in that** the optical device (500) is a camera for the exploration of color lines.

22. Bulk material sorting and analyzing system, according to claim 20, **characterized in that** the optical device (500) is a monochrome camera.

23. Bulk material sorting and analyzing system, according to claim 20, **characterized in that** the optical device (500) is an infrared camera.

24. Bulk material sorting and analyzing system, according to any of the claims 20 to 23, **characterized in that** the optical device (500) has at least one luminaire system (510) mounted at the end of the conveyor belt (140).

25. Bulk material sorting and analyzing system, according to any of the claims 9 to 24, **characterized in that** the diverting device (180) comprises an injector (170) with several air jets diverting material upwards at one or two exits and another injector (170) on the material stream diverting individual pieces of material downwards into a separate collection system.

26. Bulk material sorting and analyzing system, according to any of the claims 9 to 24, **characterized in that** it comprises a second vibratory feeder which discharges the material ejected by the diverting device (180) to a second detection system.

27. Bulk material sorting and analyzing system, according to any of the claims 9 to 26, **characterized in that** it also includes a second diverting device (180) placed at the end of the conveyor belt (140).

28. Bulk material sorting and analyzing system, according to any of the claims 9 to 27, **characterized in that** the diverting device (180) has at least one injector (170) and a mechanical paddle device controlled by an electromagnetic or compressed air cylinder.

29. Bulk material sorting and analyzing system, according to any of the claims 9 to 28, **characterized in that** the diverting device (180) incorporates a cylinder as an injector (170) connected to a metal or plastic tray (171) and placed above the material stream.

30. Bulk material sorting and analyzing system, according to any of the claims 9 to 27, **characterized in that** the diverting device (180) has at least one fast mechanical solenoid valve connected directly or indirectly, using a hose or tube, to an air injector (170) that is mounted beneath the material stream.

31. Bulk material sorting and analyzing system, according to any of the claims 8 to 30, **characterized in that** the conveyor belt (140) has a V-shaped cross-section configuration.

32. Bulk material sorting and analyzing system, according to claim 31, **characterized in that** the conveyor belt (140) comprises two flat belts (1) constructed at an angle such that together they form a V-shaped channel, where both mobile conveyor belts run at the same speed.

33. Bulk material sorting and analyzing system, according to claim 31 or 32, **characterized in that** the chute (110) is substantially semicircular, forming a sloped channel that is adjusted to the V shape of the conveyor belt (140).

34. Bulk material sorting and analyzing system, according to any of the claims 31 to 33, **characterized in that** it comprises at least two V-shaped conveyor belts (140) stepped after each other, with a first V-shaped conveyor belt and a second V-shaped conveyor belt (140) with a higher speed onto which the material passes and moves at a higher speed than on the first conveyor belt creating more space between the material pieces that follow.

35. Bulk material sorting and analyzing system, according to any of the claims 31 to 34, **characterized in that** it comprises an additional conveyor belt system, at the end of the separation module (230), consisting of two additional exit conveyor belts (140) stacked on top of each other to form the exit discharge module, wherein each conveyor belt is divided into several segments or tracks.

## Amended claims

### Amended claims under Art. 19.1 PCT

1. Method for the sorting and analysis of bulk material, applicable for the identification and sorting of pieces (130) of a bulk material stream, **characterized in that** it comprises the identification and sorting of materials online in a bulk material flow line from a vibratory feeder (100) that singles the materials and aligns them prior to their exit from the last tray of said feeder after which the individual material pieces pass to a chute (110) where they descend and are singled once again, said chute being curved which creates an optimal starting position for the entry of the material pieces onto a conveyor belt (140); wherein a LIBS laser detection unit (300), located near the exit of the conveyor belt beneath the same exit of the conveyor belt, aims at the material stream and fires a pulsed high-frequency laser beam onto the material pieces that pass by the laser system, there being a free space or opening (213) around the material stream and the laser system to allow radiation from each material piece to be transmitted without interference; wherein the detection device built into the laser unit collects the reflected radiation data from each individual piece of material, and the spectrometer that is incorporated together with this detector in the laser system unit identifies the elemental composition of each individual piece leaving the conveyor belt; and **in that** an ejection system, employing an intelligent system with a diverting device (180), creates diverting lines of ejected material and accepted material that follow the natural flow.

2. Method for the sorting and analysis of bulk material, according to claim 1, **characterized in that** the ejection system, located shortly after the laser detection unit (300) and using an intelligent system with a diverting device (180), is activated with a variable air pressure configuration selected by the controller and the software system configuration, creating one or two diverting lines of ejected material and a line of accepted material that follows the natural flow.

3. Method for the sorting and analysis of bulk material, according to claim 2, **characterized in that** a vibrating feeder discharges the material ejected by air pressure to a detection system installed next.

4. Method for the sorting and analysis of bulk material, according to any of the claims 1 to 3, **characterized in that** an induction sensor (400), located beneath the conveyor belt, in line with the material tracks on the conveyor belt, uses an electromagnetic signal to measure the size of each piece that follows the direction of the belt, detects all the metal pieces and sends this data to the central controller to analyze and calculate the size of the pieces as well as their position on the conveyor belt, said data is then used to optimize the blowing time of the ejection device and to minimize excessive sorting.

5. Method for the sorting and analysis of bulk material, according to claim 4, **characterized in that** an optical device (500), located above the conveyor belt, scans and analyzes the entire width of the conveyor belt and collects data regarding each piece of material passing in front of it, such as size, shape, volume, color, brightness, surface composition or a combination thereof.

6. Method for the sorting and analysis of bulk material, according to claim 5, **characterized in that** data is collected and sent by a multiplexer device to a multichannel spectroscopy to analyze the chemical compounds, especially in the waves of the infrared regions.

7. Method for the sorting and analysis of bulk material, according to claims 5 and 6, **characterized in that** the data collected from the spectrometer as well as data from the induction sensors and optical device is used in the system's software to count each piece of material with a specified elemental composition, allowing the selection unit to follow a configured specific mix of materials or defined alloys.

8. Bulk material sorting and analyzing system, applicable for the identification and sorting of pieces (130) of a bulk material stream, according to the method of claims 1 to 7, **characterized in that** it comprises:
- a conveyor assembly consisting of a vibrating feeder (100) which aligns the materials, a chute (110) arranged next, and a conveyor belt (140) located immediately after the exit of said chute (110);
- a LIBS (Laser-Induced Breakdown Spectroscopy) laser detection unit (300), located at the exit of the conveyor belt (140), beneath the exit of the conveyor belt, in such a way that it projects a beam that ascends to the material stream, being installed and configured to fire said high frequency pulsed laser beam at the material pieces through a free opening (213) existing around the material stream and the laser unit (300), which allows radiation to be transmitted without interference to each material part, said laser detection unit (300) incorporates a detection device therein that collects the radiation data sent from each individual material piece, which together with the spectrometer identifies the elemental composition of each individual piece leaving the conveyor belt (140);
- and a diverting device (180) for ejected pieces (200, 210) and accepted pieces (220), installed after the laser detection unit (300).

9. Bulk material sorting and analyzing system, according to claim 8, **characterized in that** the diverting device (180) is an air pressure device.

10. Bulk material sorting and analyzing system, according to claim 9, **characterized in that** the diverting device (180) comprises at least one injector (170) by means of an air pressure system of variable configuration, which is selected by a controller according to the software configuration, to create the lines of ejected parts (200, 210) and accepted parts (220).

11. Bulk material sorting and analyzing system, according to any of the claims 8 to 10, **characterized in that** the conveyor belt (140) is equipped with a surface provided with means (150), such as pipes or grooves, which keep the material pieces aligned on said conveyor belt, as well as with a speed control device.

12. Bulk material sorting and analyzing system, according to any of the claims 8 to 11, **characterized in that** the chute (110) down which the material slides has a semi-transparent configuration.

13. Bulk material sorting and analyzing system, according to any of the claims 8 to 12, **characterized in that** the chute (110) down which the material slides has a curved configuration at its exit end to the conveyor belt (140).

14. Bulk material sorting and analyzing system, according to any of the claims 8 to 13, **characterized in that** the chute (110) has at least one channel-shaped track.

15. Bulk material sorting and analyzing system, according to claim 14, **characterized in that** the chute (110) has side walls determining tracks.

16. Bulk material sorting and analyzing system, according to claim 15, **characterized in that** the chute (110) with side walls has a "U" shape and is placed in line with the "U" shaped tracks of the vibratory feeder tray (100).

17. Bulk material sorting and analyzing system, according to any of the claims 8 to 17, **characterized in that** it includes at least one induction sensor (400) beneath the conveyor belt (140) to locate, detect and count each piece of material composed of metal or any metal composition, so as to collect data for later use in the sorting management of the system's program configurations, together with data sent from the laser unit.

18. Bulk material sorting and analyzing system, according to any of the claims 8 to 17, **characterized in that**, additionally, it includes a control unit and a processor with specific sorting software to collect data and use say data to make programmed selections.

19. Bulk material sorting and analyzing system, according to claim 18, **characterized in that** it includes an induction sensor (400) connected to the control unit, whose data together with data collected by the spectrometer of the laser unit (300), allows the control unit to follow a specific recipe with a given composition of elements.

20. Bulk material sorting and analyzing system, according to any of the claims 8 to 19, **characterized in that**, after the vibrating feeder (100), chute (110) and conveyor belt (140), and before the LIBS laser unit (300), it includes an optical device (500) incorporated at the end of the conveyor belt (140), which scans and analyses the entire width of the conveyor belt and collects data regarding each piece of material passing in front of it.

21. Bulk material sorting and analyzing system, according to claim 20, **characterized in that** the optical device (500) is a camera for the exploration of color lines.

22. Bulk material sorting and analyzing system, according to claim 20, **characterized in that** the optical device (500) is a monochrome camera.

23. Bulk material sorting and analyzing system, according to claim 20, **characterized in that** the optical device (500) is an infrared camera.

24. Bulk material sorting and analyzing system, according to any of the claims 20 to 23, **characterized in that** the optical device (500) has at least one luminaire system (510) mounted at the end of the conveyor belt (140).

25. Bulk material sorting and analyzing system, according to any of the claims 9 to 24, **characterized in that** the diverting device (180) comprises an injector (170) with several air jets diverting material upwards at one or two exits and another injector (170) on the material stream diverting individual pieces of material downwards into a separate collection system.

26. Bulk material sorting and analyzing system, according to any of the claims 9 to 24, **characterized in that** it comprises a second vibratory feeder which discharges the material ejected by the diverting device (180) to a second detection system.

27. Bulk material sorting and analyzing system, according to any of the claims 9 to 26, **characterized in that** it also includes a second diverting device (180) placed at the end of the conveyor belt (140).

28. Bulk material sorting and analyzing system, according to any of the claims 9 to 27, **characterized in that** the diverting device (180) has at least one injector (170) and a mechanical paddle device controlled by an electromagnetic or compressed air cylinder.

29. Bulk material sorting and analyzing system, according to any of the claims 9 to 28, **characterized in that** the diverting device (180) incorporates a cylinder as an injector (170) connected to a metal or plastic tray (171) and placed above the material stream.

30. Bulk material sorting and analyzing system, according to any of the claims 9 to 27, **characterized in that** the diverting device (180) has at least one fast mechanical solenoid valve connected directly or indirectly, using a hose or tube, to an air injector (170) that is mounted beneath the material stream.

31. Bulk material sorting and analyzing system, according to any of the claims 8 to 30, **characterized in that** the conveyor belt (140) has a V-shaped cross-section configuration.

32. Bulk material sorting and analyzing system, according to claim 31, **characterized in that** the conveyor belt (140) comprises two flat belts (1) constructed at an angle such that together they form a V-shaped channel, where both mobile conveyor belts run at the same speed.

33. Bulk material sorting and analyzing system, according to claim 31 or 32, **characterized in that** the chute (110) is substantially semicircular, forming a sloped channel that is adjusted to the V shape of the conveyor belt (140).

34. Bulk material sorting and analyzing system, according to any of the claims 31 to 33, **characterized in that** it comprises at least two V-shaped conveyor belts (140) stepped after each other, with a first V-shaped conveyor belt and a second V-shaped conveyor belt (140) with a higher speed onto which the material passes and moves at a higher speed than on the first conveyor belt creating more space between the material pieces that follow.

35. Bulk material sorting and analyzing system, according to any of the claims 31 to 34, **characterized in that** it comprises an additional conveyor belt system, at the end of the separation module (230), consisting of two additional exit conveyor belts (140) stacked on top of each other to form the exit discharge module, wherein each conveyor belt is divided into several segments or tracks.
